# EUROPEAN PATENT APPLICATION

(11) **EP 3 572 445 A1**
(43) Date of publication of application: **27.11.2019**
(21) Application number: 17893342.0
(22) Date of filing: 06.12.2017
(51) Int. Cl.: C08G 18/10, C08J 9/00, C08G 18/08, C08G 18/40, B60G 11/22, C08G 101/00

(54) **MICROCELLULAR FOAMING POLYURETHANE ELASTOMER FOR JOUNCE BUMPERS AND METHOD FOR PREPARING SAME**

(30) Priority: 19.01.2017 KR 20170009217
(71) Applicant: SKC Co., Ltd., Suwon-si, Gyeonggi-do 16336 (KR)
(72) Inventor: YANG, Jae Soo, Suwon-si Gyeonggi-do 16493 (KR); CHOI, Hee Young, Hwaseong-si Gyeonggi-do 18319 (KR); JUNG, Ju Ai, Ansan-si Gyeonggi-do 15593 (KR)
(74) Representative: Dehns
(86) International application number: PCT/KR2017/014209
(87) International publication number: WO 2018/135748

(57) **Abstract**

An embodiment relates a microcellular foaming polyurethane elastomer for jounce bumpers and a method for preparing the same. The microcellular foaming polyurethane elastomer for jounce bumpers according to the embodiment has, because of a microcellular structure obtained through foaming using a prepolymer and a main ingredient, durability that can withstand repeated compressions during driving of an automobile and, in particular, exhibits a low height change rate and has excellent properties such as tensile strength, elongation, compression set, etc. even after repeated compressions, and thus can be usefully used for jounce bumpers. Also, according to the method for preparing a microcellular foaming polyurethane elastomer for jounce bumpers according to the embodiment, when preparing a prepolymer, the viscosity of the prepolymer is improved by reacting at a certain ratio: 4,4'-diphenylmethane diisocyanate; poly(oxytetramethylene) glycol or poly(caprolactone) glycol; and α-hydro-ω-hydroxypoly(oxypropylene) or α-hydro-ω-hydroxypoly(oxypropylene-co-oxyethylene), and thus the raw material can be handled easily, the storage stability of the prepolymer can be improved, and the height change rate of the elastomer can be maintained at 10% or less.

## Description

### Technical Field

Embodiments relate to a microcellularly foamed polyurethane elastomer for a jounce bumper and a process for preparing the same. More specifically, the embodiments relate to a polyurethane elastomer to be used for suspension devices of bicycles, motorcycles, and automobiles.

### Background Art

Foamed polyurethane having a microcellular structure has been extensively used for suspension devices of bicycles, motorcycles, and automobiles, and helper springs of furniture or high-vibration matrices by virtue of their excellent vibration damping and impact absorption properties as well as excellent dynamic characteristics under high loads, durability, and permanent deformation resistance. In particular, foamed polyurethane is widely used for a jounce bumper, which is installed in an automobile suspension device to absorb impact together with metal springs. Thus, foamed polyurethane used for a jounce bumper is required to have such properties as compression set, tensile strength, and elongation. Further, foamed polyurethane must have a small rate of change in height to be caused by repeated compression during the driving of a vehicle.

In general, foamed polyurethane may be prepared by reacting a polyol with a diisocyanate-based material. A method of preparing foamed polyurethane using naphthalene diisocyanate (NDI) among the above is well known.

Specifically, NDI alone is reacted with a polyol to prepare a polyurethane prepolymer containing a terminal isocyanate (NCO) group. Thereafter, the polyurethane prepolymer is mixed with a base component of water, a catalyst, a foam stabilizer, an antioxidant, a chain extender, and the like, which is then foamed in a foaming machine to prepare a foamed polyurethane.

In addition, there has been recently developed a method of preparing foamed polyurethane having excellent flexural fatigue resistance by reacting a high-melting-point isocyanate-based material such as 1,5-naphthalene diisocyanate (NDI), 3,3'-dimethyl-4,4'-biphenylene diisocyanate (TODI), and p-phenylene diisocyanate (PPDI) with at least two polyols (Korean Laid-open Patent Publication No. 2008-0003268). Further, Korean Patent No. 10-1465486 discloses a method of preparing a foamed polyurethane elastomer by reacting TODI with a polyol to prepare a prepolymer and mixing, with stirring, the prepolymer with a foaming agent composed of a mixture of a low-molecular-weight glycol and a high-molecular-weight glycol.

In addition, Korean Patent No. 10-1351432 discloses a method of preparing a microcellularly foamed polyurethane elastomer by reacting NDI with a polyol to prepare a prepolymer and mixing the prepolymer with (i) a compound, as an emulsifier, selected from the group consisting of 2,4-toluene diisocyanate, 2,6-toluene diisocyanate, 2,4-diphenylmethane diisocyanate, 4,4'-diphenylmethane diisocyanate, hexamethylene diisocyanate, 1,4'-cyclohexane diisocyanates, and a mixture thereof; and (ii) a C₂₋₁₀ hydrocarbon having 2 to 4 hydroxyl groups and a molecular weight of 500 or less or a mixture thereof.

### Disclosure of Invention

### Technical Problem

However, such isocyanates as NDI, TODI, PPDI, and the like exemplified in the above-mentioned patents have disadvantages in that they are relatively expensive, a prepolymers obtained therefrom have a high viscosity, which requires high operation temperatures and makes inconvenient to handle the raw materials, and the storage stability is very low since their reaction activities are relatively high. Meanwhile, 4,4'-diphenylmethane diisocyanate (p-MDI) has advantages in that it is relatively cheap and its viscosity is relatively low. When an MDI is used, however, it is not possible to satisfy such main properties as high repetitive durability characteristics required for a jounce bumper of an automobile suspension device, in particular, the rate of change in height upon repeated compression.

Thus, the embodiments aim to develop a foamed polyurethane elastomer prepared from 4,4'-diphenylmethane diisocyanate, which is cheap, has a low viscosity thereby making it convenient to handle the raw materials, and capable of enhancing the storage stability of a prepolymer. Here, the elastomer has excellent physical properties required for a jounce bumper of an automobile suspension device. Further the embodiments aim to provide a process for preparing the same.

### Solution to Problem

An embodiment provides a microcellularly foamed polyurethane elastomer for a jounce bumper, which comprises prepolymer segments and polyol segments interconnected with each other via an NCO bond, wherein the polyol segments are employed in an amount of 80 to 120 parts by weight per 100 parts by weight of the prepolymer segments, and the elastomer has a change in height of 10% or less upon repeated compression of 500,000 times per 1 Hz at a force of 5 to 8 kN.

Further, an embodiment provides a jounce bumper for an automobile suspension device prepared from the elastomer.

In addition, an embodiment provides a process for preparing a microcellularly foamed polyurethane elastomer for a jounce bumper, which comprises (1) reacting (A) 4,4'-diphenylmethane diisocyanate, and (B) (b1) at least one selected from poly(oxytetramethylene) glycol and poly(caprolactone) glycol, and (b2) at least one selected from α-hydro-ω-hydroxypoly(oxypropylene) and α-hydro-ω-hydroxypoly(oxypropylene-co-oxyethylene) to prepare a prepolymer having a terminal free isocyanate (NCO) group;
(2) mixing water, a polyol, and an additive to prepare a base component; and
(3) mixing and foaming the prepolymer prepared in the step (1) and the base component prepared in the step (2),
wherein in the step (1) the compound (A) and the compound (B) are reacted at a weight ratio of 30:70 to 75:25 to prepare the prepolymer, and
in the step (2) the polyol is employed in an amount of 80 to 120 parts by weight per 100 parts by weight of the prepolymer.

### Advantageous Effects of Invention

The microcellularly foamed polyurethane elastomer for a jounce bumper according to the embodiment has a microcellular structure obtained by foaming a prepolymer and a base component, whereby it is excellent in such physical properties as durability that can withstand repeated compression during the driving of a vehicle (especially, a low change in height upon repeated compression), tensile strength, elongation, and compression set. Thus, it can be advantageously used for a jounce bumper. In addition, according to the process for preparing a microcellularly foamed polyurethane elastomer for a jounce bumper, 4,4'-diphenylmethane diisocyanate; poly(oxytetramethylene) glycol or poly(caprolactone) glycol; and α-hydro-ω-hydroxypoly(oxypropylene) or α-hydro-ω-hydroxypoly(oxypropylene-co-oxyethylene) are reacted at specific ratios for the preparation of a prepolymer, thereby improving the viscosity thereof. Thus, it is convenient to handle the raw materials, the storage stability can be enhanced, and the change in height of the elastomer can be maintained to be 10% or less.

### Best Mode for Carrying out the Invention

Hereinafter, the present invention is explained in more detail.

An embodiment provides a microcellularly foamed polyurethane elastomer for a jounce bumper, which comprises prepolymer segments and polyol segments interconnected with each other via an NCO bond, wherein the polyol segments are employed in an amount of 80 to 120 parts by weight per 100 parts by weight of the prepolymer segments, and the elastomer has a change in height of 10% or less upon repeated compression of 500,000 times per 1 Hz at a force of 5 to 8 kN.

The prepolymer segment is composed of specific diisocyanate units and at least two specific polyol units. Specifically, the prepolymer segment may comprise (A) a 4,4'-diphenylmethane diisocyanate unit, and (B) (b1) at least one selected from a poly(oxytetramethylene) glycol unit and a poly(caprolactone) glycol unit, and (b2) at least one selected from an α-hydro-ω-hydroxypoly(oxypropylene) unit and an α-hydro-ω-hydroxypoly(oxypropylene-co-oxyethylene) unit.

In the present specification, the term "compound A unit" in a polymer refers to a unit derived from the compound A among the repeat units that constitute the polymer chain. That is, the compound A used as a monomer in the polymerization of a polymer would be one of the repeat units that constitute the polymer chain after a certain component or bond at the terminal is modified by a reaction such as condensation polymerization. The polymer thus produced will thus contain the compound A unit in the main chain or side chain.

The prepolymer segment may comprise a 4,4-diphenylmethane diisocyanate (p-MDI) unit as the diisocyanate unit (A).

p-MDI is advantageous in that it is cheaper than such diisocyanates as naphthalene diisocyanate (NDI), 3,3'-dimethyl-4,4'-biphenylene diisocyanate (TODI), and p-phenylene diisocyanate (PPDI), it is convenient to handle the raw materials due to its low viscosity, and it is excellent in storage stability.

The polyol unit (B) that constitutes the prepolymer segment may comprise (b1) at least one selected from a poly(oxytetramethylene) glycol unit and a poly(caprolactone) glycol unit, and (b2) at least one selected from an α-hydro-ω-hydroxypoly(oxypropylene) unit and an α-hydro-ω-hydroxypoly(oxypropylene-co-oxyethylene) unit.

Among them, the unit (b1) improves the resistance to water, oils, solvents, chlorine, and the like and may be environmentally friendly since it is a biodegradable unit. In addition, the unit (b2) may serve to improve the elastic recovery rate by forming a crosslinked structure in the polymer thanks to the terminal hydroxyl group. As described above, the polyol unit (B) comprises both the units (b1) and (b2).

On the other hand, if the polyol unit (B) comprises only one of the units (b1) and (b2), a crosslinked structure cannot be formed, which lowers the elastic recovery rate, and the rate of change in height of the foamed polyurethane elastomer finally obtained therefrom would not fall within the range of 10% or less, so that the polyurethane elastomer would not have sufficient durability against external loads.

For example, the polyol unit (B) may be constituted as follows:
(i) a poly(oxytetramethylene) glycol unit and an α-hydro-ω-hydroxypoly(oxypropylene) unit;
(ii) a poly(caprolactone) glycol unit and ω-hydro-ω-hydroxypoly(oxypropylene) unit;
(iii) a poly(oxytetramethylene) glycol unit, a poly(caprolactone) glycol unit, and an α-hydro-ω-hydroxypoly(oxypropylene) unit;
(iv) a poly(oxytetramethylene) glycol unit and an α-hydro-ω-hydroxypoly(oxypropylene-co-oxyethylene) unit;
(v) a poly(caprolactone) glycol unit and an α-hydro-ω-hydroxypoly(oxypropylene-co-oxyethylene) unit;
(vi) a poly(oxytetramethylene) glycol unit, a poly(caprolactone) glycol unit, and an α-hydro-ω-hydroxypoly(oxypropylene-co-oxyethylene) unit; and
(vii) a poly(oxytetramethylene) glycol unit, a poly(caprolactone) glycol unit, an α-hydro-ω-hydroxypoly(oxypropylene) unit, and an α-hydro-ω-hydroxypoly(oxypropylene-co-oxyethylene) unit

The unit (A) and the unit (B) may be interconnected with each other to form a chain in the prepolymer segment. For example, the unit (A) and the unit (B) may be interconnected with each other via an NCO bond.

The prepolymer segment may comprise the unit (A) and the unit (B) at a weight ratio of 30:70 to 75:25, a weight ratio of 40:60 to 75:25, or a weight ratio of 50:50 to 75:25. Further, the prepolymer segment may comprise the unit (A) and the unit (B) at an equivalent ratio of 3:1 to 24:1, an equivalent ratio of 5:1 to 24:1, or an equivalent ratio of 8:1 to 24:1.

In addition, the prepolymer segment may comprise the unit (b1) in an amount of 15 to 60% by weight, 20 to 60% by weight, 30 to 60% by weight, or 30 to 50% by weight. If the content of the unit (b1) is less than the above range, the secondary bonding force of the soft segment of the elastomer may be weakened, which may lower the elastic recovery rate.

In addition, the prepolymer segment may comprise the unit (b2) in an amount of 0.5 to 20% by weight, 1 to 20% by weight, 5 to 20% by weight, 5 to 10% by weight, or 10 to 20% by weight. If the unit (b2) is employed in an excessive amount as the content thereof exceeds the above range, the crosslinking density is increased, which lowers the elastic recovery rate, and the rate of change in height upon repeated compression may exceed 10%.

The prepolymer segment may have, for example, a number average molecular weight (Mn) in the range of 1,000 to 10,000 g/mole, 1,000 to 7,000 g/mole, 1,000 to 5,000 g/mole, 1,000 to 3,000 g/mole, 1,000 to 2,500 g/mole, or 1,000 to 1,500 g/mole.

The polyol segment can increase the degree of crystallinity by interacting with the polyol units contained in the prepolymer segments, thereby improving the physical properties such as the compression set, the rate of change in height, and the elongation of a jounce bumper.

The polyol segment may be composed of conventional polyol units used to prepare polyurethane. Specifically, the polyol segment may comprise a polymeric polyol unit. More specifically, the polyol segment may comprise a poly(oxytetramethylene) glycol unit, a poly(caprolactone) glycol unit, or a copolymer unit in which a poly(oxytetramethylene) glycol unit and a poly(caprolactone) glycol unit are employed at a weight ratio of 1:9 to 9:1.

The microcellularly foamed polyurethane elastomer for a jounce bumper has a composition in which prepolymer segments and polyol segments are interconnected with each other via an NCO bond.

The elastomer may comprise the polyol segments in an amount of 30 to 150 parts by weight, 50 to 130 parts by weight, or 80 to 120 parts by weight, per 100 parts by weight of the prepolymer segments. If the content of the polyol segments is within the above range, they can increase the degree of crystallinity by interacting with the polyol units contained in the prepolymer segments, thereby enhancing the durability. It is also possible to maintain the physical properties such as the compression set, the rate of change in height, and the like at excellent levels.

The microcellularly foamed polyurethane elastomer for a jounce bumper has a microcellular structure in which a plurality of pores are dispersed in the polyurethane, whereby the elastomer is excellent in such performance as compression set, heat resistance, rate of change in height, tensile strength, elongation, and the like.

Specifically, the elastomer may have a compression set of 10% or less as measured by the KS M ISO 1856 standard method. Further, the elastomer may have a density of 0.4 to 0.8 g/cm³ and a glass transition temperature (Tg) of -60°C to 10°C. In addition, the elastomer may have a tensile strength of 3 to 6 MPa and an elongation of 300 to 800% as measured by the KS M 6518 standard method (Test Examples 1 to 3).

Further, an embodiment provides a jounce bumper for an automobile suspension device prepared from the elastomer.

In addition, an embodiment provides a process for preparing a microcellularly foamed polyurethane elastomer for a jounce bumper, which comprises (1) reacting (A) 4,4'-diphenylmethane diisocyanate, and (B) (b1) at least one selected from poly(oxytetramethylene) glycol and poly(caprolactone) glycol, and (b2) at least one selected from α-hydro-ω-hydroxypoly(oxypropylene) and α-hydro-ω-hydroxypoly(oxypropylene-co-oxyethylene) to prepare a prepolymer having a terminal free isocyanate (NCO) group;
(2) mixing water, a polyol, and an additive to prepare a base component; and
(3) mixing and foaming the prepolymer prepared in the step (1) and the base component prepared in the step (2),
wherein in the step (1) the compound (A) and the compound (B) are reacted at a weight ratio of 30:70 to 75:25 to prepare the prepolymer, and
in the step (2) the polyol is employed in an amount of 80 to 120 parts by weight per 100 parts by weight of the prepolymer.

Specifically, the process according to the embodiment comprises (1) reacting (A) 4,4'-diphenylmethane diisocyanate, and (B) (b1) at least one selected from poly(oxytetramethylene) glycol and poly(caprolactone) glycol, and (b2) at least one selected from α-hydro-ω-hydroxypoly(oxypropylene) and α-hydro-ω-hydroxypoly(oxypropylene-co-oxyethylene) to prepare a prepolymer having a terminal free isocyanate (NCO) group.

The prepolymer may contain the terminal free NCO group in an amount of 7 to 25% by weight, 10 to 25% by weight, 12 to 25% by weight, or 15 to 25% by weight.

The compound (b1), among the compounds used in the preparation of the prepolymer, may have a number average molecular weight (Mn) in the range of 500 to 5,000 g/mole, in the range of 1,000 to 4,000 g/mole, or in the range of 1,000 to 3,000 g/mole. The compound (b2) may have a number average molecular weight (Mn) in the range of 400 to 8,000 g/mole, in the range of 2,000 to 8,000 g/mole, or in the range of 3,000 to 8,0000 g/mole.

In addition, the compound (b1) may have a hydroxyl functionality of 1.0 to 3.0, 1.5 to 3.0, or 1.5 to 2.5. Here, the hydroxyl functionality refers to the number of terminal hydroxyl groups present in a molecule. The compound (b2) may have a hydroxyl functionality of 2.0 to 6.0, 2.0 to 5.0, or 2.0 to 4.0.

If the hydroxyl functionality of the unit (b2) is within the above preferable range, a proper crosslinked structure is formed, which may be more advantageous to the rate of change in height and the compression set.

As an example, the compound (b1) may have a number average molecular weight of 1,000 to 4,000 g/mole and a hydroxyl functionality of 1.5 to 2.5, and the compound (b2) may have a number average molecular weight of 2,000 to 8,000 g/mole and a hydroxyl functionality of 2.0 to 6.0.

If the number average molecular weights and the hydroxyl functionalities of the compounds (b1) and (b2) are within the above ranges, the prepolymer produced in the above step (1) has an appropriate level of viscosity, so that it is convenient to handle the same, and the elastomer obtained therefrom has an appropriate level of flexibility, so that it is possible to prevent breakage as well as to have sufficient hardness. For example, the prepolymer may have a viscosity of 200 to 2,000 cps, 300 to 1,500 cps, or 400 to 1,000 cps at 60°C.

The reaction in the above step (1) is preferably carried out by first defoaming the compound (B) and then reacting it with the compound (A); for, it can minimize the side reactions and can maximize the reaction yield. In such event, the defoaming may be carried out at a temperature of 70 to 100°C or 80 to 90°C for 0.5 to 3 hours or 0.5 to 1 hour.

When it is determined that the defoaming of the compound (B) is sufficiently performed through the defoaming step, it is reacted with the compound (A) to prepare a prepolymer having a terminal free NCO group.

The reaction between the compounds (A) and (B) may be carried out at a temperature of 70 to 90°C or 75 to 85°C for 1 to 3 hours or 1.5 to 2.5 hours. In such event, the reaction between the compounds (A) and (B) may be carried out in the absence of a catalyst. Such a non-catalytic reaction has an advantage that the reaction yield can be maximized because the reaction temperature is easily controlled.

The range of weight ratio between the compound (A) and the compound (B) used in the above reaction is as described above.

The process according to the embodiment comprises (2) mixing water, a polyol, and an additive to prepare a base component.

Water serves as a foaming agent for generating carbon dioxide (CO₂) by reaction with a diisocyanate. Water may be employed in an amount of 0.1 to 5 parts by weight, 0.5 to 5 parts by weight, or 1 to 3 parts by weight, per 100 parts by weight of the prepolymer.

In addition, the polyol may be employed in an amount of 30 to 150 parts by weight, 50 to 130 parts by weight, or 80 to 120 parts by weight, per 100 parts by weight of the prepolymer.

The polyol employed in the base component may be any conventional polyol used to prepare polyurethane. For example, the polyol may comprise a polymeric polyol.

As an example, the polyol may comprise a poly(oxytetramethylene) glycol unit, a poly(caprolactone) glycol unit, or a copolymer unit in which a poly(oxytetramethylene) glycol unit and a poly(caprolactone) glycol unit are employed at a weight ratio of 1:9 to 9:1. According to an example, in the above step (1), the compound (A) and the compound (B) may be reacted at a weight ratio of 30:70 to 75:25 to prepare a prepolymer; in the above step (2), the polyol is employed in an amount of 80 to 120 parts by weight per 100 parts by weight of the prepolymer.

Examples of the additive may include at least one selected from the group consisting of a crosslinking agent, a chain extender, a catalyst, a foam stabilizer, an antioxidant, and an antimicrobial agent.

The crosslinking agent may be employed as required. For example, it may be trimethyl propanol (TMP), glycerol, or 4,4-methylene bis(2-chloroaniline) (MOCA). It may be employed in an amount of 0 to 3 parts by weight per 100 parts by weight of the prepolymer.

The chain extender may be a C₂₋₁₀ hydrocarbon having a molecular weight of 500 or less and having 2 to 4 hydroxyl groups. For example, it may be 1,4-butanediol, 1,3-propanediol, ethylene glycol, or 1,6-hexanediol. It may be employed in an amount of 0.1 to 30 parts by weight, specifically 5 to 20 parts by weight, per 100 parts by weight of the prepolymer.

Examples of the catalyst may include an organometallic compound (such as tin (II) salts of organic carboxylic acids, specifically tin (II) dioctoate, tin (II) dilaurate, dibutyltin diacetate, dibutyltin dilaurate, and the like), a tertiary amine (such as tetramethylethylenediamine, N-methylmorpholine, diethylbenzylamine, triethylamine, dimethylcyclohexylamine, diazabicyclooctane, N,N'-dimethylpiperazine, N-methyl-N'-(4-N-dimethylamino) butylpiperazine, and N,N,N',N",N"-pentamethyldiethylenetriamine), an amidine (such as 2,3-dimethyl-3,4,5,6-tetrahydropyrimidine), a tris-(dialkylaminoalkyl)-s-hexahydrotriazine (such as tris-(N,N-dimethylaminopropyl)-s-hexahydrotriazine), a tetraalkylammonium hydroxide (such as tetramethylammonium hydroxide), an alkali metal hydroxide (such as sodium hydroxide), an alkali metal alcoholate (such as sodium methylate and potassium isopropylate), and an alkali metal salt of a long chain fatty acid having 10 to 20 carbon atoms and optionally a side chain OH group. Preferred are 2,6-dimethylmorpholine ethyl ether and tetramethylethylenediamine. The catalyst may be employed in an amount of 0.5 to 3 parts by weight, specifically 1 to 2 parts by weight, per 100 parts by weight of the prepolymer, depending on the reactivity.

The foam stabilizer can prevent the phase separation of the base component, reduce the surface tension of the polyurethane to be produced to thereby grow bubbles, and prevent the destruction of cells due to the destabilization of bubbles as the viscosity is increased. In addition, the foam stabilizer improves the flowability of the foam and the filling capability at the time of foaming in a mold, thereby making the product density uniform. Preferably, it may be a silicone foam stabilizer. The foam stabilizer may be employed in an amount of 0.3 to 3 parts by weight, specifically 0.5 to 2.5 parts by weight, per 100 parts by weight of the prepolymer. If the foam stabilizer is 0.3 parts by weight or more, it is possible to prevent the problem that the molding of a foam is not uniform. If the foam stabilizer is 3 parts by weight or less, it is possible to prevent the problem that the hardness of a foam decreases or shrinkage occurs.

The antioxidant is not particularly limited as long as it is a commonly used antioxidant. Examples thereof may include hindered phenol-based and hindered arylamine-based antioxidants. The content of the antioxidant may be 0.01 to 1.0 part by weight per 100 parts by weight of the prepolymer.

The antimicrobial agent is not particularly limited as long as it is a commonly used antimicrobial agent. The content of the antimicrobial agent may be 0.01 to 1.0 part by weight or 0.1 to 1.0 part by weight per 100 parts by weight of the prepolymer.

The process according to the embodiment comprises (3) mixing and foaming the prepolymer prepared in the step (1) and the base component prepared in the step (2).

The foaming is carried out using water contained in the base component as a foaming agent.

Chemical foaming that induces a chemical reaction with water used as a foaming agent can form a polyurethane elastomer having pores of various diameters. The chemical foaming can produce a more rigid and finer cell structure since a new bond is generated through the chemical reaction with water. Thus, it can satisfy the durability in terms of the rate of change in height and the compression set. In addition, an elastomer formed by the chemical foaming can have various cell sizes. Thus, it is easy to absorb vibrations in various frequencies and to have a cell structure that is more advantageous in terms of vibration damping and durability as compared with one formed by mechanical foaming. In contrast, in the case of mechanical foaming such as gas injection, it is easy to produce an elastomer having a uniform cell size, whereas the physical properties such as density and strength may be deteriorated.

Specifically, the prepolymer prepared in the above step (1) and the base component prepared in the above step (2) may be mixed in a foaming machine, and the mixture may then be foamed in a mold. Thereafter, it is cured in the mold at a predetermined temperature and time, and released from the mold. Thereafter, it is subjected to secondary curing in an oven to finally obtain a microcellularly foamed polyurethane elastomer.

A low-pressure foaming machine may be used as the foaming machine.

In the above, the temperature of the mold may be 40 to 80°C or 50 to 70°C, and the curing time may be 5 to 25 minutes or 10 to 15 minutes.

When the prepolymer is mixed with the base component in the foaming machine, the temperature of the prepolymer may be 40 to 80°C or 50 to 60°C, and the temperature of the base component may be 40 to 70°C or 50 to 60°C. If the temperature of the prepolymer at the time of mixing for foaming is within the above range, it is more advantageous to achieving a viscosity, which is appropriate for handling, and maintaining the storage stability. In addition, if the temperature of the base component is within the above range, it may be more advantageous to maintaining the viscosity to an appropriate level for handling and to preventing the phase separation phenomenon.

The temperature at the secondary curing may be 75 to 95°C or 80 to 90°C, and the curing time may be 10 to 20 hours or 10 to 15 hours.

As described above, since the microcellularly foamed polyurethane elastomer for a jounce bumper according to the embodiment comprises a prepolymer and a base component at a specific ratio, it is excellent in such physical properties as durability that can withstand repeated compression during the driving of a vehicle (especially, a low change in height upon repeated compression), tensile strength, elongation, and compression set. Thus, it can be advantageously used for a jounce bumper. In addition, according to the process for preparing a microcellularly foamed polyurethane elastomer for a jounce bumper, 4,4'-diphenylmethane diisocyanate; poly(oxytetramethylene) glycol or poly(caprolactone) glycol; and α-hydro-ω-hydroxypoly(oxypropylene) or α -hydro-ω-hydroxypoly(oxypropylene-co-oxyethylene) are reacted at specific ratios for the preparation of a prepolymer, thereby improving the viscosity thereof. Thus, it is convenient to handle the raw materials, the storage stability can be enhanced, and the change in height of the elastomer can be maintained to be 10% or less.

### Mode for the Invention

Hereinafter, the present invention is explained in more detail by the following examples. However, these examples are set forth to illustrate the present invention, and the scope of the present invention is not limited thereto.

### Example 1: Preparation of a microcellularly foamed polyurethane elastomer Step (1): Preparation of a prepolymer

60 parts by weight of poly(caprolactone) glycol (PCL) (Mn: 1,900 to 2,100 g/mole, hydroxyl functionality: 2.0, OHV: 56 mg KOH/g, CAPA 2201A, Perstorp), and 10 parts by weight of α-hydro-ω-hydroxypoly(oxypropylene) (PPG) (Mn: 7,500 g/mole, hydroxyl functionality: 2.0 to 3.0, MCNS) were mixed, which was then defoamed at 85°C for 1 hour. 30 parts by weight of 4,4'-diphenylmethane diisocyanate (p-MDI) (LUPRANATE MS, BASF) was added thereto with stirring to prepare a prepolymer having a terminal free NCO group in a content of 7.4%.

### Step (2): Preparation of a base component

2 parts by weight of water, 100 parts by weight of poly(caprolactone) glycol, 1.5 parts by weight of trimethylpropanol (TMP) (Perstorp) as a crosslinking agent, 10 parts by weight of 1,4-butanediol (1,4-BD) (SK Global Chemical Co.), 1 part by weight of a catalyst (DABCO 33-LV, Air Products), 1 part by weight of a foam stabilizer (SH-190, DOW Corning), 0.01 part by weight of an antioxidant (Irganox 1010, BASF), and 0.1 part by weight of an antimicrobial agent (I-PPG20, Bestek) per 100 parts by weight of the prepolymer prepared in the above step (1) were mixed to prepare a base component.

### Step (3): Mixing and foaming

While the prepolymer and the base component prepared in the preceding steps were maintained at 60°C and 50°C, respectively, they were mixed in a low-pressure foaming machine. The mixture was foamed in a mold at 60°C and cured for 10 minutes, which was then released from the mold and cured in an oven at 90°C for 12 hours to prepare a microcellularly foamed polyurethane elastomer.

### Examples 2 to 10 and Comparative Examples 1 to 5

The same procedures as in Example 1 were repeated to prepare microcellularly foamed polyurethane elastomer, except that the prepolymer and the base component were prepared in the compositions as shown in Table 1 below.

**[Table 1]**

| | Prepolymer | | | | Base component | | | | | | | |
|---|---|---|---|---|---|---|---|---|---|---|---|---|
| | p-MDI | PTMG | PCL | PPG | Water | Polyol | CE | CA | Cat. | FS | AO | AB |
| Ex. 1 | 30 | - | 60 | 10 | 2 | 100 | 10 | 1.5 | 1 | 1 | 0.01 | 0.1 |
| Ex. 2 | 40 | | 50 | 10 | 2 | 100 | 10 | 1.5 | 1 | 1 | 0.01 | 0.1 |
| Ex. 3 | 50 | - | 40 | 10 | 2 | 100 | 10 | 1.5 | 1 | 1 | 0.01 | 0.1 |
| Ex. 4 | 50 | - | 30 | 20 | 2 | 100 | 10 | 1.5 | 1 | 1 | 0.01 | 0.1 |
| Ex. 5 | 60 | | 30 | 10 | 2 | 100 | 10 | 1.5 | 1 | 1 | 0.01 | 0.1 |
| Ex. 6 | 60 | - | 35 | 5 | 2 | 100 | 10 | 1.5 | 1 | 1 | 0.01 | 0.1 |
| Ex. 7 | 60 | 35 | - | 5 | 2 | 100 | 10 | 1.5 | 1 | 1 | 0.01 | 0.1 |
| Ex. 8 | 75 | - | 20 | 5 | 2 | 100 | 10 | 1.5 | 1 | 1 | 0.01 | 0.1 |
| Ex. 9 | 75 | - | 15 | 10 | 2 | 100 | 10 | 1.5 | 1 | 1 | 0.01 | 0.1 |
| Ex. 10 | 75 | - | 24.5 | 0.5 | 2 | 100 | 10 | 1.5 | 1 | 1 | 0.01 | 0.1 |
| C. Ex. 1 | 20 | - | 70 | 10 | 2 | 100 | 10 | 1.5 | 1 | 1 | 0.01 | 0.1 |
| C. Ex. 2 | 50 | - | 50 | - | 2 | 100 | 10 | 1.5 | 1 | 1 | 0.01 | 0.1 |
| C. Ex. 3 | 50 | - | 25 | 25 | 2 | 100 | 10 | 1.5 | 1 | 1 | 0.01 | 0.1 |
| C. Ex. 4 | 50 | - | - | 50 | 2 | 100 | 10 | 1.5 | 1 | 1 | 0.01 | 0.1 |
| C. Ex. 5 | 80 | - | 10 | 10 | 2 | 100 | 10 | 1.5 | 1 | 1 | 0.01 | 0.1 |

| | | | | | | | | | | | | |
|---|---|---|---|---|---|---|---|---|---|---|---|---|
| PTMG: poly(oxytetramethylene) glycol; CE: chain extender; CA: crosslinking agent; FS: foam stabilizer; AO: antioxidant; AB: antimicrobial agent | | | | | | | | | | | | |

### Test Example

### 1. Tensile strength (MPa) and elongation (%)

The microcellularly foamed polyurethane elastomers obtained in the Examples and Comparative Examples were measured for tensile strength and elongation by the KS M 6518 method. The results are shown in Tables 2 and 3.

### 2. Durability

The microcellularly foamed polyurethane elastomers obtained in the Examples and Comparative Examples were subjected to a repeated compression test of 500,000 times per 1 Hz at a force of 5.9 kN, and the changes in height were measured. The results are shown in Tables 2 and 3.

### 3. Compression set

The microcellularly foamed polyurethane elastomers obtained in the Examples and Comparative Examples were measured for compression set by the KS M ISO 1856: 2007 method (23 ± 2°C, 70 hours, 50%). The results are shown in Tables 2 and 3.

**[Table 2]**

| Item | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| NCO% | 7.4 | 11.1 | 15 | 15.2 | 18.6 | 18.5 | 18.6 | 24.3 | 24.4 | 24.3 |
| Weight (g) | 38 | 38 | 38 | 38 | 38 | 38 | 38 | 38 | 38 | 38 |
| Density (kg/m³) | 480 | 480 | 480 | 480 | 480 | 480 | 480 | 480 | 480 | 480 |
| compression set | 10 | 9 | 6 | 9 | 8 | 8 | 7 | 7 | 8 | 9 |
| Tensile strength (MPa) | 3.2 | 3 | 3.7 | 4.8 | 4.2 | 4.1 | 4.5 | 4.3 | 5.2 | 4.1 |
| Elongation (%) | 730 | 680 | 660 | 580 | 560 | 570 | 580 | 530 | 420 | 550 |
| Rate of change in height (ΔH) | 7.8 | 6.8 | 4.9 | 6.5 | 5.8 | 6.2 | 5.8 | 6.2 | 6.4 | 6.8 |

**[Table 3]**

| Item | C. Ex. 1 | C. Ex. 2 | C. Ex. 3 | C. Ex. 4 | C. Ex. 5 |
|---|---|---|---|---|---|
| NCO% | 3.8 | 14.7 | 15.3 | 16.0 | 26.2 |
| Weight (g) | 38 | 38 | 38 | 38 | 38 |
| Density (kg/m³) | 480 | 480 | 480 | 480 | 480 |
| compression set | 20 | 11 | 18 | 12 | 13 |
| Tensile strength (MPa) | 3.8 | 4.4 | 5.5 | 5.0 | 6.2 |
| Elongation (%) | 820 | 420 | 480 | 360 | 380 |
| Rate of change in height (ΔH) | 15.2 | 10.5 | 13.2 | - | 12.8 |

As shown in Tables 2 and 3, the microcellularly foamed polyurethane elastomers prepared in Examples 1 to 10 were excellent overall in such physical properties as tensile strength, elongation, compression set, and rate of change in height. In contrast, the microcellularly foamed polyurethane elastomers prepared in Comparative Examples 1 to 5 were excellent in tensile strength, whereas they were broken as a result of a durability evaluation test, that is, a repeated compression test of 500,000 times per 1 Hz at a force of 5.9 kN, or the rates of change in height were high.

## Claims

1. A microcellularly foamed polyurethane elastomer for a jounce bumper, which comprises prepolymer segments and polyol segments interconnected with each other via an NCO bond, wherein the polyol segments are employed in an amount of 80 to 120 parts by weight per 100 parts by weight of the prepolymer segments, and the elastomer has a change in height of 10% or less upon repeated compression of 500,000 times per 1 Hz at a force of 5 to 8 kN.

2. The microcellularly foamed polyurethane elastomer for a jounce bumper of claim 1, wherein the prepolymer segment comprises:
(A) a 4,4'-diphenylmethane diisocyanate unit, and
(B) (b1) at least one selected from a poly(oxytetramethylene) glycol unit and a poly(caprolactone) glycol unit, and (b2) at least one selected from an α-hydro-ω-hydroxypoly(oxypropylene) unit and an α-hydro-ω-hydroxypoly(oxypropylene-co-oxyethylene) unit.

3. The microcellularly foamed polyurethane elastomer for a jounce bumper of claim 2, wherein the prepolymer segment comprises the unit (A) and the unit (B) at a weight ratio of 30:70 to 75:25.

4. The microcellularly foamed polyurethane elastomer for a jounce bumper of claim 2, wherein the prepolymer segment comprises the unit (b2) in an amount of 0.5 to 20% by weight.

5. The microcellularly foamed polyurethane elastomer for a jounce bumper of claim 1, which has a compression set of 10% or less as measured by the KS M ISO 1856 standard method.

6. The microcellularly foamed polyurethane elastomer for a jounce bumper of claim 5, which has a density of 0.4 to 0.8 g/cm³ and a glass transition temperature (Tg) of -60°C to 10°C.

7. The microcellularly foamed polyurethane elastomer for a jounce bumper of claim 5, which has a tensile strength of 3 to 6 MPa and an elongation of 300 to 800% as measured by the KS M 6518 standard method.

8. A jounce bumper for an automobile suspension device prepared from the elastomer of any one of claims 1 to 7.

9. A process for preparing a microcellularly foamed polyurethane elastomer for a jounce bumper, which comprises (1) reacting (A) 4,4'-diphenylmethane diisocyanate, and (B) (b1) at least one selected from poly(oxytetramethylene) glycol and poly(caprolactone) glycol, and (b2) at least one selected from α-hydro-ω-hydroxypoly(oxypropylene) and α-hydro-ω-hydroxypoly(oxypropylene-co-oxyethylene) to prepare a prepolymer having a terminal free isocyanate (NCO) group;
(2) mixing water, a polyol, and an additive to prepare a base component; and
(3) mixing and foaming the prepolymer prepared in the step (1) and the base component prepared in the step (2),
wherein in the step (1) the compound (A) and the compound (B) are reacted at a weight ratio of 30:70 to 75:25 to prepare the prepolymer, and
in the step (2) the polyol is employed in an amount of 80 to 120 parts by weight per 100 parts by weight of the prepolymer.

10. The process for preparing a microcellularly foamed polyurethane elastomer for a jounce bumper of claim 9, wherein the prepolymer contains the terminal free NCO group in an amount of 7 to 25% by weight.

11. The process for preparing a microcellularly foamed polyurethane elastomer for a jounce bumper of claim 9, wherein the polyol contained in the base component comprises a poly(oxytetramethylene) glycol unit, a poly(caprolactone) glycol unit, or a copolymer unit in which a poly(oxytetramethylene) glycol unit and a poly(caprolactone) glycol unit are employed at a weight ratio of 1:9 to 9:1.

12. The process for preparing a microcellularly foamed polyurethane elastomer for a jounce bumper of claim 9, wherein the compound (b1) has a number average molecular weight of 1,000 to 4,000 g/mole and a hydroxyl functionality of 1.5 to 2.5, and
the compound (b2) has a number average molecular weight of 2,000 to 8,000 g/mole and a hydroxyl functionality of 2.0 to 6.0.

13. The process for preparing a microcellularly foamed polyurethane elastomer for a jounce bumper of claim 9, wherein in the step (2) water is employed in an amount of 0.1 to 5 parts by weight per 100 parts by weight of the prepolymer.
